# EUROPEAN PATENT SPECIFICATION

(11) **EP 4 449 529 B1**
(45) Date of publication and mention of the grant of the patent: **18.02.2026**
(21) Application number: 21839464.1
(22) Date of filing: 15.12.2021
(51) Int. Cl.: H01M 8/04537, H01M 8/04746, H01M 8/04089

(54) **A CONTROL UNIT**
STEUEREINHEIT
UNITÉ DE COMMANDE

(43) Date of publication of application: 23.10.2024
(73) Proprietor: Volvo Truck Corporation, 40508 Göteborg (SE)
(72) Inventor: NEILSON, Rohan, 721 31 Västerås (SE); ARYA, Pranav, 437 42 Lindome (SE)
(74) Representative: Valea AB
(86) International application number: PCT/EP2021/085851
(87) International publication number: WO 2023/110071

(56) References cited:
- US-A1- 2004 197 614
- US-A1- 2011 171 547

## Description

### TECHNICAL FIELD

The invention relates to a control unit for a fuel cell system. Moreover, the present invention relates to a fuel cell system assembly. Additionally, the present invention relates to a power assembly. Furthermore, the present invention relates to a vehicle. Finally, the present invention relates to a method for controlling a fuel cell system.

The invention can be applied in heavy-duty vehicles, such as trucks, buses, cars and construction equipment. Although the invention will be described with respect to a truck, the invention is not restricted to this particular vehicle, but may also be used in other vehicles such as working machines, seagoing vessels or the like.

### BACKGROUND

A fuel cell system generally comprises and anode and a cathode. Moreover, a fuel cell system may comprise a cathode inlet and a cathode outlet as well as a e.g. an on/off valve controlling a feedback connection between the cathode outlet and the cathode inlet.

For instance, EP 1 427 046 B1 fuel cell system in accordance with the above wherein the above-mentioned on/off valve is open or closed in dependence on signals issued from moisture sensors.

However, the EP 1 427 046 B1 fuel cell system may still be improved in order to enhance the operability thereof. US 2011/171547 discloses a control unit that controls the cathode recirculation amount in response to the demanded power.

### SUMMARY

An object of the invention is to provide a control unit for a fuel cell system which control unit can control a cathode recirculation arrangement of the fuel cell system in a manner that will result in an appropriate operation of the fuel cell system.

According to a first aspect of the invention, the object is achieved by a device according to claim 1.

As such, a first aspect of the invention relates to a control unit for a fuel cell system. The fuel cell system is adapted to produce electric power and comprising an anode and a cathode. The anode is adapted to receive fuel and the cathode being adapted to receive an oxidant. The fuel cell system comprises a cathode inlet, adapted to guide fluid comprising the oxidant towards the cathode, and a cathode outlet, adapted to guide fluid away from the cathode. The fuel cell system further comprises a cathode recirculation arrangement adapted to selectively allow or prevent fluid communication between the cathode outlet and the cathode inlet in response to information issued from the control unit. Purely by way of example, the cathode recirculation arrangement may be used for reducing the minimum possible power that can be output from the fuel cell system whilst keeping a cell voltage within a safe range.

According to the first aspect of the present invention, the control unit is adapted to predict a future power requirement from the fuel cell system over a future time range and to issue information to the cathode recirculation arrangement in response to the predicted future power requirement. The information is indicative of whether the cathode recirculation arrangement should assume a condition so as to allow fluid communication between the cathode outlet and the cathode inlet or so as to prevent fluid communication between the cathode outlet and the cathode inlet.

The control unit according to the first aspect of the present invention is thus adapted to issue signals to the cathode recirculation arrangement in response to a predicted future power requirement from the fuel cell system, i.e. the power that the fuel cell system is predicted to produce during the future time range. This in turn implies that the cathode recirculation arrangement may be controlled in a proactive manner which in turn may result in an appropriately high probability that the fuel cell system may be operational. Thus, in contrast to a reactive control strategy by which there is a risk that that the cathode recirculation arrangement may be operated using short cycles which for instance may result in fluctuations, oscillations or other undesired transient behaviours, the control unit according to the first aspect of the present invention implies that that the cathode recirculation arrangement may be operated in a more stable manner.

Optionally, the control unit is adapted to use a minimum output power closed communication value when issuing information to the cathode recirculation arrangement in response to the predicted future power requirement. The minimum output power closed communication value is indicative of the minimum power that can be produced by the fuel cell system when fluid communication between the cathode outlet and the cathode inlet is prevented and the fuel cell system is operating.

The minimum output power closed communication value may be useful information when determining the information indicative of whether the cathode recirculation arrangement should assume a condition so as to allow fluid communication between the cathode outlet and the cathode inlet or so as to prevent fluid communication between the cathode outlet and the cathode inlet.

The minimum output power open communication value is less than the minimum output power closed communication value and could even be net zero or negative depending on the recirculated fraction, i.e. the amount of fluid in the cathode outlet being recirculated to the cathode inlet. Purely by way of example, throttles located upstream and downstream of a compressor and turbine respectively may be used for targeting a low minimum output power open communication value.

Optionally, the control unit is adapted to determine an average future power requirement value, indicative of a predicted average future power requirement over a future time range. The control unit is adapted to issue the information in response to the average future power requirement value and the minimum output power closed communication value to thereby control the cathode recirculation arrangement during the future time range.

The use of the average future power requirement value implies that the cathode recirculation arrangement may be controlled with a reduced risk for rapid changes in the control of the cathode recirculation arrangement, as compared to a control based on an instantaneous power requirement for example.

Optionally, the control unit is adapted to issue the information such that, in response to detecting that the average future power requirement value is equal to or exceeds the minimum output power closed communication value, the information is indicative of that fluid communication between the cathode outlet and the cathode inlet is allowed for an aggregated fluid communication time range being smaller than the future time range, preferably the aggregated fluid communication time range is within the range of 0 - 50% of the future time range.

The inventors of the present invention have realised that in a situation such as the one presented hereinabove, there may be no need to allow fluid communication between the cathode outlet and the cathode inlet for a major portion of the future time range. As such, in scenarios falling within the above conditions, it may suffice to allow fluid communication between the cathode outlet and the cathode inlet for a limited time, such as future time instants or future time ranges for which a low future power requirement is expected.

Optionally, the control unit is adapted to issue the information such that, in response to detecting that the future time range comprises one or more instant time ranges within which the future power requirement is expected to be lower than the minimum output power closed communication value, the information is indicative of that fluid communication between the cathode outlet and the cathode inlet is allowed for the one or more instant time ranges. Preferably the information is indicative of that fluid communication between the cathode outlet and the cathode inlet is only allowed for the one or more instant time ranges.

Optionally, the control unit is adapted to use a minimum output power open communication value. The minimum output power open communication value is indicative of the minimum power that can be produced by the fuel cell system when fluid communication between the cathode outlet and the cathode inlet is allowed and the fuel cell system is operating.

The minimum output power open communication value may be useful when determining the information to be issued to the cathode recirculation arrangement.

Optionally, the control unit is adapted to issue the information such that, in response to detecting a reference time range of the least one of the one or more instant time ranges comprises a sub-range within which the future power requirement is expected to be lower than the minimum output power open communication value, the temporal extension of the reference time range is increased.

As such, upon detection of a sub-range in accordance with the above, the control unit may issue information such that the cathode recirculation arrangement assumes the condition so as to allow fluid communication between the cathode outlet and the cathode inlet for a longer time range than the sub-range. This in turn results in an appropriately high likelihood that the fuel cell system need not be shut off unnecessarily often, even in conditions in which the future power requirement is expected to be lower than the minimum output power open communication value from time to time.

Optionally, the control unit is adapted to issue the information such that, in response to detecting that the average future power requirement value is lower than the minimum output power closed communication value but exceeds the minimum output power open value, the information is indicative of that fluid communication between the cathode outlet and the cathode inlet is allowed for at least 90% of, preferably throughout, the future time range.

The inventors of the present invention have realized that it may be beneficial to allow fluid communication between the cathode outlet and the cathode inlet for a relatively large portion of, or even throughout, the future time range upon detecting that the average future power requirement value is between the limits presented hereinabove. As such, rather than switching between allowing and preventing fluid communication a plurality of times during the future time range, fluid communication may be allowed for a relatively long time which may result in an appropriately stable control of the fuel cell system.

Optionally, the control unit is adapted to, in response to detecting that the average future power requirement value is lower than the minimum output power open communication value, issue fuel cell system information indicative of that the fuel cell system should be shut down throughout the future time range.

When the average future power requirement value is below the above-mentioned limit, it may not be possible to operate the fuel cell system. As such, shutting down the fuel cell system may be an appropriate measure to take.

Optionally, the fuel cell system is adapted to contribute to the propulsion of a vehicle and wherein the control unit is adapted to receive vehicle related information indicative of at least one of the following for the future time range:
- a traffic situation for an upcoming ground segment that the vehicle is predicted to be travelling on;
- a terrain condition for an upcoming ground segment that the vehicle is predicted to be travelling on;
- a topography of an upcoming ground segment that the vehicle is predicted to be travelling on;
- a gross weight of vehicle;
- ambient environmental conditions, such as speed and direction of wind;
- health, history and/or condition of the fuel cell system, and
- an estimated range of the vehicle and a distance to a refuelling station
and to use the vehicle related information when predicting the future power requirement from the fuel cell system.

One or more of the above pieces of information may result in that the average future power requirement value is determined in an appropriate manner.

Optionally, the fuel cell system is adapted to be connected to a battery and wherein the control unit is adapted to receive battery information indicative of at least one of the following for the future time range:
- a current state of charge of the battery, and
- an energy capacity of the battery,
and to use the battery information when predicting the future power requirement from the fuel cell system.

The above information may for instance provide information indicative of whether or not it is possible to operate the fuel cell system in order to charge the battery. The future operation of the fuel cell system may be dependent on whether or not the battery can be charged. As such, information as regards the battery may be used in order to adequately predict the future power requirement from the fuel cell system.

Optionally, the future time range is at least 10 seconds, preferably at least 100 seconds, more preferred at least 300 seconds. However, it should be noted that in embodiments of the control unit of the invention, the future time range may be at least 1000 seconds.

A second aspect of the present invention relates to a fuel cell system assembly comprising a fuel cell system. The fuel cell system comprises an anode and a cathode, wherein the anode is adapted to receive fuel and the cathode is adapted to receive an oxidant. The fuel cell system comprises a cathode inlet, adapted to guide fluid comprising the oxidant towards the cathode, and a cathode outlet, adapted to guide fluid from the cathode. The fuel cell system further comprises a cathode recirculation arrangement adapted to selectively allow a fluid communication between the cathode outlet and the cathode inlet. The fuel cell system assembly further comprises a control unit according to the first aspect of the present invention. The control unit is adapted to issue information to at least the cathode recirculation arrangement.

Optionally, the cathode inlet comprises a cathode inlet conduit assembly and the cathode outlet comprises a cathode outlet conduit assembly. The cathode recirculation arrangement connects the cathode inlet conduit assembly to the cathode outlet conduit assembly.

Optionally, the fuel cell system comprises a turbo that in turn comprises a compressor forming part of the cathode inlet and a turbine forming part of the cathode outlet. The cathode recirculation arrangement connects a portion of the cathode inlet conduit assembly being located upstream the compressor to a portion of the cathode outlet conduit assembly being located upstream of the turbine, as seen in an intended direction of flow from the cathode inlet to the cathode outlet.

Optionally, the cathode recirculation arrangement comprises a cathode recirculation arrangement valve. The cathode recirculation arrangement valve is adapted to assume at least an open condition and a closed condition, respectively, in response to information issued from the control unit.

Optionally, the cathode recirculation arrangement valve is adapted to assume at least one intermediate condition between the open condition and the closed condition, preferably the cathode recirculation arrangement valve is adapted to assume a plurality of different intermediate conditions between the open condition and the closed condition.

Optionally, the control unit is adapted to issue fuel cell system information to the fuel cell system, the fuel cell system information comprising information whether or not the fuel cell system should be shut off.

A third aspect of the present invention relates to a power assembly comprising the fuel cell system assembly according to the second aspect of the present invention. The power assembly further comprises a battery. The fuel cell system is adapted to charge the battery at least during a charging condition of the power assembly.

A fourth aspect of the present invention relates to a vehicle comprising a fuel cell system assembly according to the second aspect of the present invention or a power assembly according to the third aspect of the present invention.

A fifth aspect of the present invention relates to a method for controlling a fuel cell system. The fuel cell system is adapted to produce electric power and comprising an anode and a cathode. The anode is adapted to receive fuel and the cathode is adapted to receive an oxidant. The fuel cell system comprises a cathode inlet, adapted to guide fluid comprising the oxidant towards the cathode, and a cathode outlet, adapted to guide fluid away from the cathode. The fuel cell system further comprises a cathode recirculation arrangement adapted to selectively allow a fluid communication between the cathode outlet and the cathode inlet.

According to the fifth aspect of the present invention, the method comprises predicting a future power requirement from the fuel cell system over a future time range and controlling the cathode recirculation arrangement in response to the prediction.

Optionally, the method comprises using a minimum output power closed communication value when issuing information to the cathode recirculation arrangement in response to the predicted future power requirement. The minimum output power closed communication value is indicative of the minimum power that can be produced by the fuel cell system when fluid communication between the cathode outlet and the cathode inlet is prevented and the fuel cell system is operating.

Optionally, the method comprises determining an average future power requirement value, indicative of a predicted average future power requirement over a future time range. The method further comprises issuing the information in response to the average future power requirement value and the minimum output power closed communication value to thereby control the cathode recirculation arrangement during the future time range.

Optionally, the method comprises issuing the information such that, in response to detecting that the average future power requirement value is equal to or exceeds the minimum output power closed communication value, the information is indicative of that fluid communication between the cathode outlet and the cathode inlet is allowed for an aggregated fluid communication time range being smaller than the future time range. Preferably the aggregated fluid communication time range is within the range of 0 - 50% of the future time range.

Optionally, the method comprises issuing the information such that, in response to detecting that the future time range comprises one or more instant time ranges within which the future power requirement is expected to be lower than the minimum output power closed communication value, the information is indicative of that fluid communication between the cathode outlet and the cathode inlet is allowed for the one or more instant time ranges. Preferably, the information is indicative of that fluid communication between the cathode outlet and the cathode inlet is only allowed for the one or more instant time ranges.

Optionally, the method comprises using a minimum output power open communication value, the minimum output power open communication value being indicative of the minimum power that can be produced by the fuel cell system when fluid communication between the cathode outlet and the cathode inlet is allowed and the fuel cell system is operating.

Optionally, the method comprises issuing the information such that, in response to detecting a reference time range of the least one of the one or more instant time ranges comprises a sub-range within which the future power requirement is expected to be lower than the minimum output power open communication value, the temporal extension of the reference time range is increased.

Optionally, the method comprises issuing the information such that, in response to detecting that the average future power requirement value is lower than the minimum output power closed communication value but exceeds the minimum output power open value, the information is indicative of that fluid communication between the cathode outlet and the cathode inlet is allowed for at least 90% of, preferably throughout, the future time range.

Optionally, the method comprises, in response to detecting that the average future power requirement value is lower than the minimum output power open communication value, issuing fuel cell system information indicative of that the fuel cell system should be shut down throughout the future time range.

Optionally, the fuel cell system is adapted to contribute to the propulsion of a vehicle and wherein the method comprises receiving vehicle related information indicative of at least one of the following for the future time range:
- a traffic situation for an upcoming ground segment that the vehicle is predicted to be travelling on;
- a terrain condition for an upcoming ground segment that the vehicle is predicted to be travelling on;
- a topography of an upcoming ground segment that the vehicle is predicted to be travelling on;
- a gross weight of vehicle;
- ambient environmental conditions, such as speed and direction of wind;
- health, history and/or condition of the fuel cell system, and
- an estimated range of the vehicle and a distance to a refuelling station
and using the vehicle related information when predicting the future power requirement of said fuel cell system.

Optionally, the fuel cell system is adapted to be connected to a battery and wherein the method comprises receiving battery information indicative of at least one of the following for the future time range:
- a current state of charge of the battery, and
- an energy capacity of the battery,
and using the battery information when predicting the future power requirement of said fuel cell system.

Optionally, the future time range is at least 10 seconds, preferably at least 100 seconds, more preferred at least 300 seconds. However, it should be noted that in embodiments of the method of the invention, the future time range may be at least 1000 seconds.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 schematically illustrates a vehicle;
Fig. 2 illustrates an embodiment of a power assembly;
Fig. 3 is a flow chart illustrating an embodiment of the control unit or the method of the present invention, and
Fig. 4a - 4d illustrate various scenarios for a future power requirement.

### DETAILED DESCRIPTION OF EXAMPLE EMBODIMENTS OF THE INVENTION

With reference to the appended drawings, below follows a more detailed description of embodiments of the invention cited as examples.

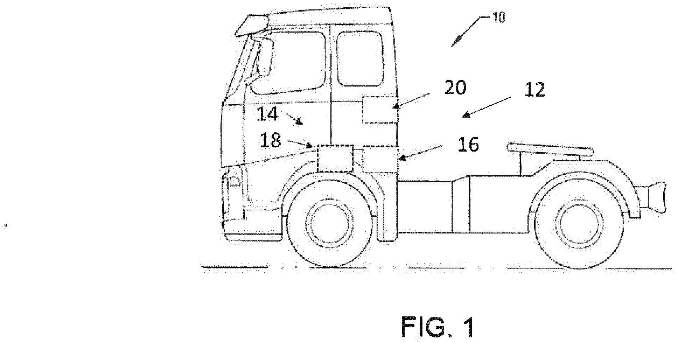

The invention will be described below for a vehicle in the form of a truck 10 such as the truck illustrated in Fig. 1. The truck 10 should be seen as an example of a vehicle which could comprise a control unit according to the present invention.

However, the present invention may be implemented in a plurality of different types of vehicles. Purely by way of example, the present invention could be implemented in a truck, a tractor, a car, a bus, a work machine such as a wheel loader or any other type of construction equipment. Moreover, the present invention need not be implanted in a vehicle but may be used for a stationary energy generating unit, such as a stationary fuel cell system (not shown).

The Fig. 1 vehicle 10 comprises a power assembly 12 comprising a fuel cell system assembly 14 and a battery 16. The fuel cell system assembly 14 comprises a fuel cell system 18 and a control unit 20 for controlling the fuel cell system 18. The fuel cell system 18 is adapted to charge the battery 16 at least during a charging condition of the power assembly 12. Other embodiments of the vehicle 10 may comprise more than one fuel cell system (not shown in Fig. 1).

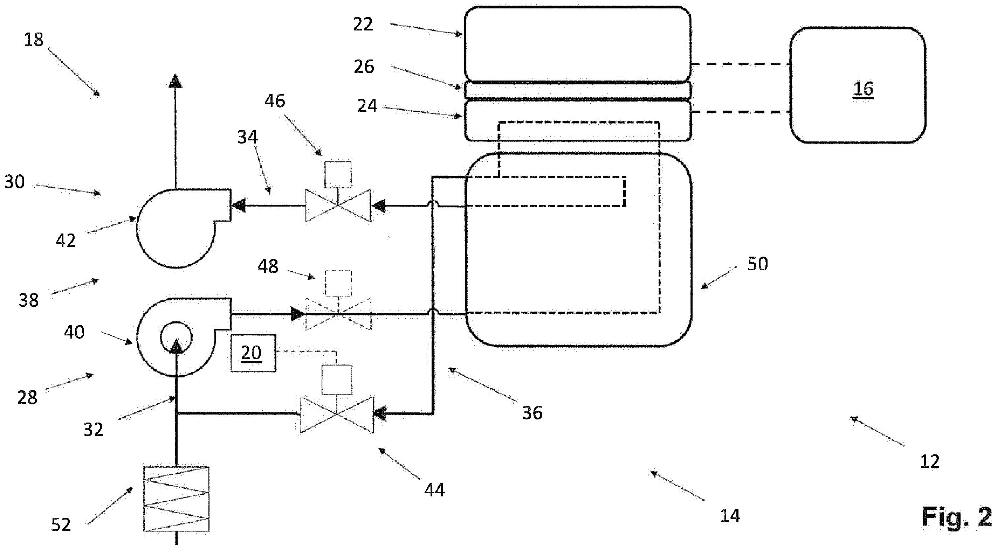

Fig. 2 schematically illustrates an embodiment of a power assembly 12. Purely by way of example, the Fig. 2 power assembly 12 may be used for a vehicle, such as the Fig. 1 truck 10.

The power assembly 12 comprises a fuel cell system assembly 14 and a battery 16, as has been indicated hereinabove. The fuel cell system assembly 14 comprises a fuel cell system 18 and a control unit 20. The control unit 20 is adapted to issue control information to the fuel cell system 18 as will be elaborated on further hereinbelow.

The fuel cell system is adapted to produce electric power and comprises an anode 22 and a cathode 24, wherein the anode 22 is adapted to receive fuel and the cathode 24 is adapted to receive an oxidant. Purely by way of example, the fuel may comprise hydrogen and the oxidant may comprise oxygen. Moreover, as indicated in Fig. 2, a membrane 26 may be located between the anode 22 and the cathode 24. As a non-limiting example, the membrane 26 may be such that it allows transport of protons, but prevents transport of electrons, from the anode 22 to the cathode 24. Because of the above prevention of electron transport through the membrane 26, electrons separated at the anode 22, which electrons for instance have been obtained by splitting hydrogen atoms into a proton and an electron, may be forwarded to a consumer of electric power, such as the battery 16 in Fig. 2.

Furthermore, again with reference to Fig. 2, the fuel cell system 18 comprises a cathode inlet 28, adapted to guide fluid comprising the oxidant towards the cathode 24, and a cathode outlet 30, adapted to guide fluid away from the cathode 24.

Furthermore, though purely by way of example, the cathode inlet 28 may comprise a cathode inlet conduit assembly 32, for instance comprising a plurality of different conduits, and the cathode outlet 30 may comprise a cathode outlet conduit assembly 34, which also may comprise a plurality of different conduits.

Moreover, as indicated in Fig. 2, the fuel cell system 18 comprises a cathode recirculation arrangement 36 adapted to selectively allow or prevent fluid communication between the cathode outlet 30 and the cathode inlet 28 in response to information issued from the control unit 20.

In the embodiment illustrated in Fig. 2, the cathode recirculation arrangement 36 connects the cathode inlet conduit assembly 32 to the cathode outlet conduit assembly 34.

Moreover, as exemplified in Fig. 2, the fuel cell system 18 may comprises a turbo 38 that in turn comprises a compressor 40 forming part of the cathode inlet 28 and a turbine 42 forming part of the cathode outlet 30. Purely by way of example, and as indicated in Fig. 2, the cathode recirculation arrangement 36 may connect a portion of the cathode inlet conduit assembly 32 being located upstream the compressor 40 to a portion of the cathode outlet conduit assembly 34 being located upstream of the turbine 42, as seen in an intended direction of flow from the cathode inlet 28 to the cathode outlet 30. However, it is envisaged that the cathode recirculation arrangement 36 may be connecting other portions of the cathode outlet 30 and the cathode inlet 28 in other embodiments of the fuel cell system 18.

As a non-limiting example, the cathode recirculation arrangement 36 may comprise a cathode recirculation arrangement valve 44. The cathode recirculation arrangement valve 44 may be adapted to assume at least an open condition and a closed condition, respectively, in response to information issued from the control unit 20.

As a first example, the cathode recirculation arrangement valve 44 may be an on/off valve. However, as another non-limiting example, the cathode recirculation arrangement valve 44 may be adapted to assume at least one intermediate condition between the open condition and the closed condition. Preferably, the cathode recirculation arrangement valve 44 may be adapted to assume a plurality of different intermediate conditions between the open condition and the closed condition. As a non-limiting example, the cathode recirculation arrangement valve 44 may be adapted to be continuously controlled from the open condition to the closed condition such that the cathode recirculation arrangement valve 44 can assume an infinite number of conditions between the from the open condition to the closed condition. As another non-limiting example, the cathode recirculation arrangement valve 44 may be adapted to be controlled from the open condition to the closed condition in a stepwise manner.

Irrespective of the implementation of the cathode recirculation arrangement 36, it Is generally such that the condition of the cathode recirculation arrangement 36 may have an influence of the minimum output power available from the fuel cell system 18.

As such, when fluid communication between the cathode outlet 30 and the cathode inlet 28 is prevented and the fuel cell system 18 is operating, the fuel cell system 18 can produce a minimum output power that corresponds to a minimum output power closed communication value. In a similar vein, when fluid communication between the cathode outlet 30 and the cathode inlet 28 is allowed and the fuel cell system 18 is operating, the fuel cell system 18 can produce a minimum output power that corresponds to a minimum output power open communication value. Generally, the minimum output power open communication value is smaller than the minimum output power close communication value, indicating that the minimum output power producible when fluid communication between the cathode outlet 30 and the cathode inlet 28 is allowed is smaller than the minimum output power producible when fluid communication between the cathode outlet 30 and the cathode inlet 28 is prevented.

Moreover, though purely by way of example, the cathode outlet conduit assembly 34 may comprise a valve 46, such as a backpressure valve 46 upstream the turbine 42. Furthermore, again as a non-limiting example, the cathode inlet conduit assembly 32 may comprise a sealing valve 48, for instance downstream the compressor 40. Purely by way of example, the sealing valve 48 may operate in response to information received from the control unit 20.

In the Fig. 2 embodiment, the fuel cell system comprises a humidifier 50. Furthermore, again with reference to Fig. 2, at least a portion of the cathode inlet conduit assembly 32 located downstream the cathode 24 may extend through the humidifier 50. In a similar manner, although again purely by way of example, at least a portion of the cathode outlet conduit assembly 34 located upstream the cathode 24 may extend through the humidifier 50.

As a further non-limiting example, the in the Fig. 2 embodiment, the cathode inlet 28 comprises an intake filter 52. Such an intake filter may be located downstream the compressor 40 in implementations of the cathode inlet 28 comprising a compressor 40.

A first aspect of the invention relates to the control unit 20 for a fuel cell system 18. As has been intimated hereinabove, the fuel cell system 18 is adapted to produce electric power. Moreover, the fuel cell system 18 comprises an anode 22 and a cathode 24. The anode 22 is adapted to receive fuel and the cathode 24 is adapted to receive an oxidant. The fuel cell system comprises a cathode inlet 28, adapted to guide fluid comprising the oxidant towards the cathode 24, and a cathode outlet 30, adapted to guide fluid away from the cathode 24. The fuel cell system further comprises a cathode recirculation arrangement 36 adapted to selectively allow or prevent fluid communication between the cathode outlet 30 and the cathode inlet 28 in response to information issued from the control unit.

Moreover, according to the first aspect of the present invention, the control unit 20 is adapted to predict a future power requirement from the fuel cell system 18 over a future time range and to issue information to the cathode recirculation arrangement 36 in response to the predicted future power requirement.

The information is indicative of whether the cathode recirculation arrangement 36 should assume a condition so as to allow fluid communication between the cathode outlet and the cathode inlet or so as to prevent fluid communication between the cathode outlet and the cathode inlet. As such, as a non-limiting example with reference to the Fig. 2 embodiment, the control unit 20 may be adapted to issue information to the cathode recirculation arrangement valve 44 indicative of whether the cathode recirculation arrangement valve 44 should assume an open condition, a closed condition or possibly an intermediate condition between the open condition and the closed condition.

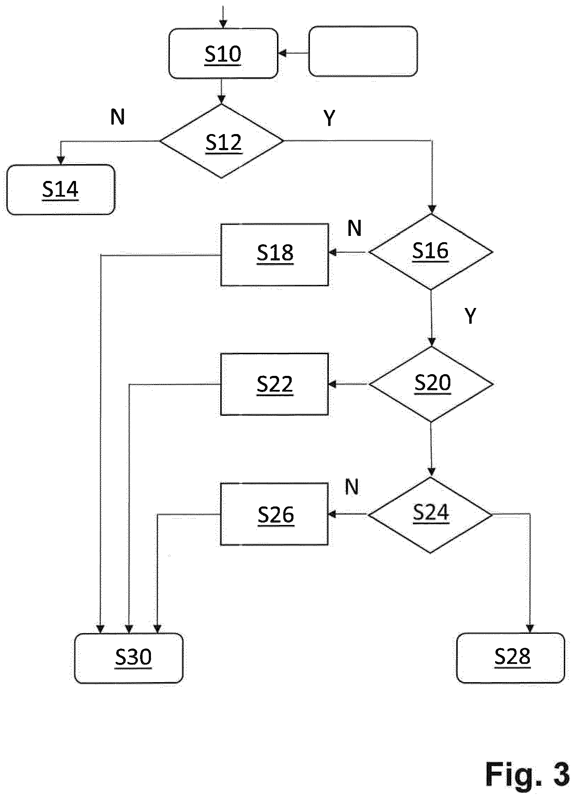

Fig. 3 illustrates a flowchart presenting how a control unit 20 according to an embodiment of the present invention is intended to operate. For the sake of completeness, the Fig. 3 flow chart may be equally applicable to the method of the present invention.

Furthermore, for the sake of completeness, it should be noted that Fig. 3 flowchart merely serves as an example of how the control unit 20 may operate and/or how the method according to the invention can be carried out. It is of course envisaged that embodiments of the control unit 20 or the method may comprise fewer steps than what is presented hereinbelow with reference to Fig. 3. Moreover, it is also envisaged that embodiments of the control unit 20 or the method may perform steps in an order different from the order discussed hereinbelow with reference to Fig. 3.

A first step S10 in Fig. 3 relates to a prediction of a future power requirement P(t) from the fuel cell system 18 over a future time range Δt. Purely by way of example, the future time range Δt may be at least 10 seconds, preferably at least 100 seconds, more preferred at least 300 seconds. As indicated by the expression P(t), the future power requirement may be presented as a function of time.

To this end, and as indicated in Fig. 3, the step S10 may comprise receiving information from other information sources. Purely by way of examples, such information sources may comprise one or more sensors.

In embodiments of the present invention in which the fuel cell system 18 is adapted to contribute to the propulsion of a vehicle, such as the Fig. 1 vehicle, the control unit 20 may be adapted to receive vehicle related information indicative of at least one of the following for the future time range Δt:
- a traffic situation for an upcoming ground segment that the vehicle is predicted to be travelling on; the traffic situation may also include information indicative of if/when the vehicle is expected to be stopped, such as at loading terminals, ferry terminals and the like, and as another alternative, the traffic situation may comprise information indicative of a potentially polluting environmental conditions such as traffic congestion, tunnels, fires, etcetera;
- a terrain condition for an upcoming ground segment that the vehicle is predicted to be travelling on;
- a topography of an upcoming ground segment that the vehicle is predicted to be travelling on;
- a gross weight of vehicle;
- ambient environmental conditions, such as speed and direction of wind;
- health, history and/or condition of the fuel cell system, and
- an estimated range of the vehicle and a distance to a refuelling station
and to use the vehicle related information when predicting the future power requirement P(t) from the fuel cell system 18.

Instead of, or in addition to, using any one of the above, in embodiments in which the fuel cell system 18 is adapted to be connected to a battery 16 and wherein the control unit 20 is adapted to receive battery information indicative of at least one of the following for the future time range Δt:
- a current state of charge of the battery, and
- an energy capacity of the battery,
and to use the battery information when predicting the future power requirement P(t) from the fuel cell system 18.

Irrespective of how the future power requirement P(t) from the fuel cell system 18 over a future time range Δt is predicted, the thus determined future power requirement P(t) is used for controlling e.g. the cathode recirculation arrangement 36.

Purely by way of example, the control unit 20 or the method of the present invention may use a minimum output power closed communication value P_{min,c} when issuing information to the cathode recirculation arrangement 36 in response to the predicted future power requirement P(t). As has been mentioned hereinabove with reference to Fig. 2, the minimum output power closed communication value P_{min,c} is indicative of the minimum power that can be produced by the fuel cell system 18 when fluid communication between the cathode outlet 30 and the cathode inlet 28 is prevented and the fuel cell system 18 is operating.

Purely by way of example, the control unit 20 or method of the invention may comprise a step S12 of assessing if there is any instant time range in the future time range Δt at which the future power requirement P(t) is expected to be lower than the minimum output power closed communication value P_{min,c}.

If no such instant time range can be identified (see letter N to the left of step S12 in Fig. 3), the control unit 20 or method of the invention may proceed to a step S14 which may relate to a normal operation of the fuel cell system 18, viz operating the fuel cell system 18 without operating the cathode recirculation arrangement 36 and by preventing fluid communication between the cathode outlet 30 and the cathode inlet 28.

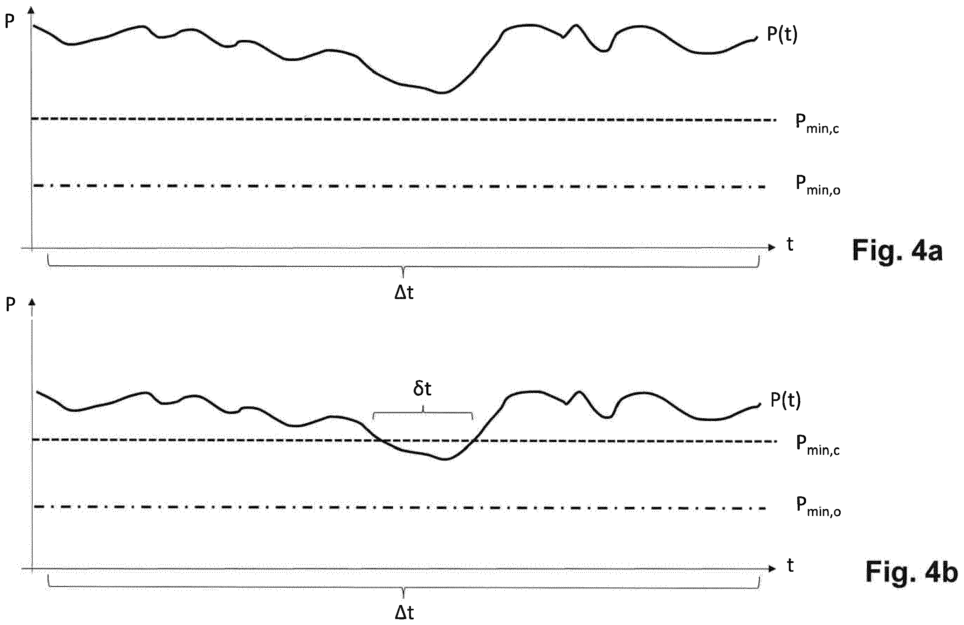

A future power requirement P(t) scenario in which no instant time range can be identified in the future time range Δt at which the future power requirement P(t) is expected to be lower than the minimum output power closed communication value P_{min,c} is illustrated in Fig. 4a. As may be gleaned from Fig. 4a, the future power requirement P(t) is consistently above the minimum output power closed communication value P_{min,c} throughout the future time range Δt.

If at least one such instant time range can be identified (see letter Y to the right of step S12 in Fig. 3), the control unit 20 or method of the invention may proceed to a step S16 which may comprise a step of assessing if there is any instant time range in the future time range Δt at which the future power requirement P(t) is expected to be lower than a minimum output power open communication value P_{min,o}. The minimum output power open communication value P_{min,o} is indicative of the minimum power that can be produced by the fuel cell system 18 when fluid communication between the cathode outlet 30 and the cathode inlet 28 is allowed and the fuel cell system 18 is operating.

If no such instant time range can be identified (see letter N to the left of step S16 in Fig. 3), the control unit 20 or method of the invention may proceed to a step S18. The aggregation of information from steps S12 and S16 results in that the future power requirement P(t) is expected to be lower than the minimum output power closed communication value P_{min,c} for at least one instant time range for the future time range Δt but that the future power requirement P(t) is not expected to be lower than the minimum output power open communication value P_{min,o} at any instant time range for the future time range Δt.

As such, step S18 may comprise that the control unit 20 or the method of the present invention issues the information such that, in response to detecting that the future time range Δt comprises one or more instant time ranges within which the future power requirement is expected to be lower than the minimum output power closed communication value P_{min,c}, the information is indicative of that fluid communication between the cathode outlet 30 and the cathode inlet 28 is allowed for the one or more instant time ranges. Preferably the information is indicative of that fluid communication between the cathode outlet 30 and the cathode inlet 28 is only allowed for the one or more instant time ranges.

A future power requirement P(t) comprising an instant time range δt within which the future power requirement is expected to be lower than the minimum output power closed communication value P_{min,c} but higher than the minimum output power open communication value P_{min,o} is illustrated in Fig. 4b. As such, in the Fig. 4b scenario, the control unit 20 or the method of the present invention issues the information such that fluid communication between the cathode outlet 30 and the cathode inlet 28 is allowed for the instant time range δt.

If there is at least one instant time range in the future time range Δt at which the future power requirement P(t) is expected to be lower than a minimum output power open communication value P_{min,o}, see the letter Y below step S16 in Fig. 3, the control unit 20 or method of the invention may proceed to a step S20.

In step S20, the control unit 20 or the method of the present invention may determine an average future power requirement value P_{avg}, indicative of a predicted average future power requirement over a future time range Δt.

The control unit 20 or the method of the present invention is adapted to issue the information in response to the average future power requirement value P_{avg} and the minimum output power closed communication value P_{min,c} to thereby control the cathode recirculation arrangement during the future time range.

Purely by way of example, step S20 may comprise comparing the average future power requirement value P_{avg} to the minimum output power closed communication value P_{min,c}. If the control unit 20 or the method of the present invention detects that the average future power requirement value P_{avg} is equal to or exceeds the minimum output power closed communication value P_{min,c}, the control unit 20 or the method of the present invention may be adapted to issue the information such that the information is indicative of that fluid communication between the cathode outlet 30 and the cathode inlet 28 is allowed for an aggregated fluid communication time range being smaller than the future time range Δt. Purely by way of example, the aggregated fluid communication time range is within the range of 0 - 50% of the future time range.

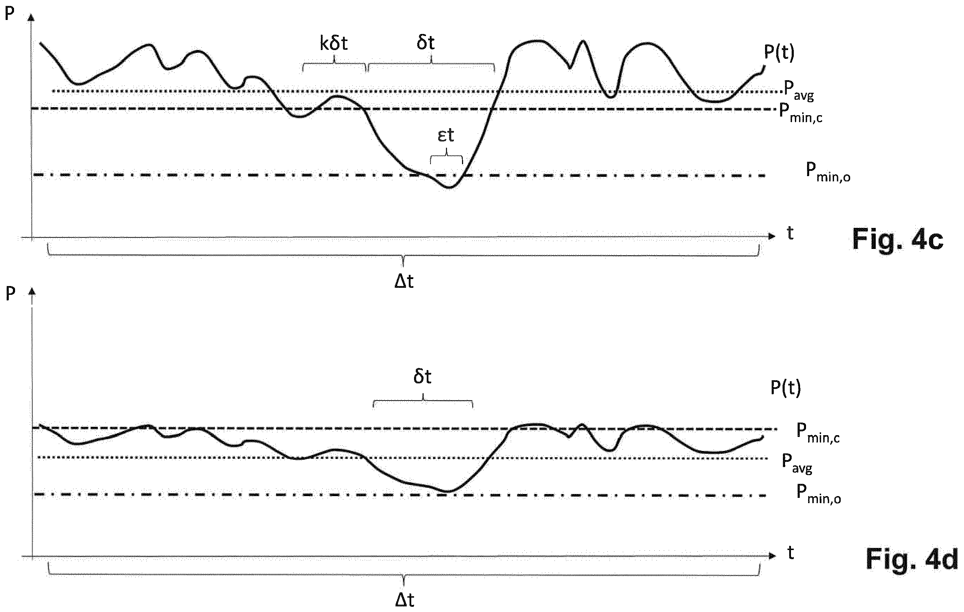

An embodiment of the above embodiment is exemplified by step S22 in Fig. 3 as well as the condition in Fig. 4c. As may be gleaned from Fig. 4c, the average future power requirement value P_{avg} exceeds the minimum output power closed communication value P_{min,c} for the future time range Δt. As such, in the Fig. 4c condition, the control unit 20 or the method of the present invention may issue information indicative of that fluid communication between the cathode outlet 30 and the cathode inlet 28 is allowed for an aggregated fluid communication time range being smaller than the future time range Δt.

Moreover, though purely by way of example, the control unit 20 or the method of the present invention may be adapted to issue the information such that, in response to detecting that the future time range Δt comprises one or more instant time ranges δt within which the future power requirement is expected to be lower than the minimum output power closed communication value P_{min,c}, the information is indicative of that fluid communication between the cathode outlet 30 and the cathode inlet 28 is allowed for the one or more instant time ranges δt.

Additionally, the control unit 20 or the method of the present invention may be adapted to use a minimum output power open communication value P_{min,o}, see e.g. Fig. 4c. As has been discussed hereinabove with reference to Fig. 2, the minimum output power open communication value P_{min,o} is indicative of the minimum power that can be produced by the fuel cell system 18 when fluid communication between the cathode outlet 30 and the cathode inlet 28 is allowed and the fuel cell system 18 is operating.

Furthermore, the control unit 20 or the method of the present invention may be adapted to issue the information such that, in response to detecting a reference time range δt of the least one of the one or more instant time ranges comprises a sub-range εt within which the future power requirement is expected to be lower than the minimum output power open communication value P_{min,o}, the temporal extension of the reference time range δt is increased.

An example of an embodiment in accordance with the above is presented with reference to Fig. 4c. In a similar manner as for Fig. 4b, the Fig. 4c condition contains an instant time range δt within which the future power requirement is expected to be lower than the minimum output power closed communication value P_{min,c}. However, in contrast to the Fig. 4b scenario, the Fig. 4c instant time range δt comprises a sub-range εt within which the future power requirement is expected to be lower than the minimum output power open communication value P_{min,o}.

The detection of the above-mentioned sub-range εt be used for increasing the reference time range δt, vis the instant time range of which the sub-range εt forms part. As such, the information issued from the control unit 20 or the method may result in that fluid communication between the cathode outlet 30 and the cathode inlet 28 is allowed for an actual time range that is greater than the instant time range δt. Purely by way of example, the increase of the instant time range δt may be dependent on the temporal extension of the sub-range εt. However, though purely by way of example, the temporal extension of the reference time range δt may be increased by at least 20%, preferably at least 40%, upon detecting a sub-range εt within which the future power requirement is expected to be lower than the minimum output power open communication value P_{min,o}. As a non-limiting example, the increase of the reference time range δt may be added before the start of the original reference time range δt. Such an example is illustrated in Fig. 4c wherein an additional time range kδt is added before the reference time range δt.

Moreover, the control unit 20 or the method of the present invention may be adapted to issue the information such that, in response to detecting that the average future power requirement value P_{avg} is lower than the minimum output power closed communication value P_{min,c} but exceeds the minimum output power open value P_{min,o}, the information is indicative of that fluid communication between the cathode outlet 30 and the cathode inlet 28 is allowed for at least 90% of, preferably throughout, the future time range Δt.

An example of the above embodiment is exemplified by steps S24 and S26 in Fig. 3 as well as Fig. 4d. Fig. 4d illustrates a scenario when the average future power requirement value P_{avg} is lower than the minimum output power closed communication value P_{min,c} but exceeds the minimum output power open value P_{min,o}. Thus, the Fig. 3 step S24 may comprise determining whether or not the average future power requirement value P_{avg} is lower than the minimum output power open communication value P_{min,o}. If it is concluded in step S24 that the average future power requirement value P_{avg} is not smaller than the minimum output power open communication value P_{min,o}, (see letter N to the left of step S24 in Fig. 3), the control unit 20 or the method according to the present invention may proceed to step 26 which may comprise sending information in response to detecting that the average future power requirement value P_{avg} is lower than the minimum output power closed communication value P_{min,c} but exceeds the minimum output power open value P_{min,o}.

As such, in the Fig. 4d scenario, the control unit 20 or the method of the present invention may issue information indicative of that fluid communication between the cathode outlet 30 and the cathode inlet 28 should be allowed for at least 90% of, preferably throughout, the future time range Δt. As such, though purely by way of example, upon detecting that P_{min,o} < P_{avg} < P_{min,c}, fluid communication between the cathode outlet 30 and the cathode inlet 28 may be allowed throughout the future time range Δt.

As may be realized from the above each one of the steps S18, S22 and S26 in the Fig. 3 flow chart may result in that the cathode recirculation arrangement 36 assumes a condition so as to allow fluid communication between the cathode outlet 30 and the cathode inlet 28 for at least a portion of the future time range Δt.

Finally, if it is concluded in step S24 that the average future power requirement value P_{avg} is smaller than the minimum output power open communication value P_{min,o}, (see letter Y to below step S24 in Fig. 3), the control unit 20 or the method according the control unit 20 or the method may be such that it is adapted to, in response to detecting that the average future power requirement value P_{avg} is lower than the minimum output power open communication value P_{min,o}, issue fuel cell system information indicative of that the fuel cell system 18 should be shut down throughout the future time range Δt.

When the average future power requirement value is below the above-mentioned limit, it may not be possible to operate the fuel cell system. As such, shutting down the fuel cell system may be an appropriate measure to take.

Further advantages and advantageous features of the invention are disclosed in the following description and in the dependent claims. It is to be understood that the present invention is not limited to the embodiments described above and illustrated in the drawings; rather, the skilled person will recognize that many changes and modifications may be made within the scope of the appended claims.

Purely by way of example, although the Fig. 3 flowchart has been used for presenting various implementations of the control unit 20 or the method of the present invention, it should be noted that embodiments of the present invention may comprise more or fewer steps than what have been discussed hereinabove with reference to Fig. 3.

## Claims

1. A control unit (20) for a fuel cell system (18), said fuel cell system (18) being adapted to produce electric power and comprising an anode (22) and a cathode (24), said anode (22) being adapted to receive fuel and said cathode (24) being adapted to receive an oxidant, said fuel cell system (18) comprising a cathode inlet (28), adapted to guide fluid comprising said oxidant towards said cathode (24), and a cathode outlet (30), adapted to guide fluid away from said cathode (24), said fuel cell system (18) further comprising a cathode recirculation arrangement (36) adapted to selectively allow or prevent fluid communication between said cathode outlet (30) and said cathode inlet (28) in response to information issued from said control unit (20), **characterized in that** said control unit (20) is adapted to predict a future power requirement (P(t)) from said fuel cell system (18) over a future time range (Δt) and to issue information to said cathode recirculation arrangement (36) in response to said predicted future power requirement (P(t)), said information being indicative of whether said cathode recirculation arrangement (36) should assume a condition so as to allow fluid communication between said cathode outlet (30) and said cathode inlet (28) or so as to prevent fluid communication between said cathode outlet (30) and said cathode inlet (28).

2. The control unit (20) according to claim 1, wherein said control unit (20) is adapted to use a minimum output power closed communication value (P_{min,c}) when issuing information to said cathode recirculation arrangement (36) in response to said predicted future power requirement (P(t)), said minimum output power closed communication value (P_{min,c}) being indicative of the minimum power that can be produced by said fuel cell system (18) when fluid communication between said cathode outlet (30) and said cathode inlet (28) is prevented and the fuel cell system (18) is operating, preferably said control unit (20) is adapted to determine an average future power requirement value (P_{avg}), indicative of a predicted average future power requirement (P(t)) over a future time range (Δt), said control unit (20) being adapted to issue said information in response to said average future power requirement value (P_{avg}) and said minimum output power closed communication value (P_{min,c}) to thereby control said cathode recirculation arrangement (36) during said future time range (Δt), preferably said control unit (20) is adapted to issue said information such that, in response to detecting that said average future power requirement value (P_{avg}) is equal to or exceeds said minimum output power closed communication value (P_{min,c}), said information is indicative of that fluid communication between said cathode outlet (30) and said cathode inlet (28) is allowed for an aggregated fluid communication time range being smaller than said future time range (Δt), preferably the aggregated fluid communication time range is within the range of 0 - 50% of said future time range (Δt).

3. The control unit (20) according to claim 2, wherein said control unit (20) is adapted to issue said information such that, in response to detecting that said future time range (Δt) comprises one or more instant time ranges (δt) within which said future power requirement (P(t)) is expected to be lower than said minimum output power closed communication value (P_{min,c}), said information is indicative of that fluid communication between said cathode outlet (30) and said cathode inlet (28) is allowed for said one or more instant time ranges (δt), preferably said information is indicative of that fluid communication between said cathode outlet (30) and said cathode inlet (28) is only allowed for said one or more instant time ranges (δt).

4. The control unit (20) according to any one of claims 2 to 3, wherein said control unit (20) is adapted to use a minimum output power open communication value (P_{min,o}), said minimum output power open communication value (P_{min,o}) being indicative of the minimum power that can be produced by said fuel cell system (18) when fluid communication between said cathode outlet (30) and said cathode inlet (28) is allowed and the fuel cell system (18) is operating.

5. The control unit (20) according to claim 4, when dependent on claim 3, wherein said control unit (20) is adapted to issue said information such that, in response to detecting a reference time range (δt) of said least one of said one or more instant time ranges comprises a sub-range (εt) within which said future power requirement (P(t)) is expected to be lower than said minimum output power open communication value (P_{min,o}), the temporal extension of said reference time range (δt) is increased.

6. The control unit (20) according to claim 4, wherein said control unit (20) is adapted to issue said information such that, in response to detecting that said average future power requirement value (P_{avg}) is lower than said minimum output power closed communication value (P_{min,c}) but exceeds said minimum output power open value (P_{min,o}), said information is indicative of that fluid communication between said cathode outlet (30) and said cathode inlet (28) is allowed for at least 90% of, preferably throughout, said future time range (Δt).

7. The control unit (20) according to any one of claims 4 to 6, wherein said control unit (20) is adapted to, in response to detecting that said average future power requirement value (P_{avg}) is lower than said minimum output power open communication value (P_{min,o}), issue fuel cell system (18) information indicative of that the fuel cell system (18) should be shut down throughout said future time range (Δt).

8. The control unit (20) according to any one of the preceding claims, wherein said fuel cell system (18) is adapted to contribute to the propulsion of a vehicle (10) and wherein said control unit (20) is adapted to receive vehicle related information indicative of at least one of the following for said future time range (Δt):
- a traffic situation for an upcoming ground segment that the vehicle (10) is predicted to be travelling on;
- a terrain condition for an upcoming ground segment that the vehicle (10) is predicted to be travelling on;
- a topography of an upcoming ground segment that the vehicle (10) is predicted to be travelling on;
- a gross weight of vehicle (10);
- ambient environmental conditions, such as speed and direction of wind;
- health, history and/or condition of the fuel cell system, and
- an estimated range of said vehicle and a distance to a refuelling station and to use the vehicle related information when predicting said future power requirement (P(t)) from said fuel cell system (18).

9. The control unit (20) according to any one of the preceding claims, wherein said fuel cell system (18) is adapted to be connected to a battery (16) and wherein said control unit (20) is adapted to receive battery information indicative of at least one of the following for said future time range (Δt):
- a current state of charge of the battery (16), and
- an energy capacity of said battery (16),
and to use the battery information when predicting said future power requirement (P(t)) from said fuel cell system (18).

10. The control unit (20) according to any one of the preceding claims, wherein said future time range (Δt) is at least 10 seconds, preferably at least 100 seconds, more preferred at least 300 seconds.

11. A fuel cell system (18) assembly comprising a fuel cell system (18), said fuel cell system (18) comprising an anode (22) and a cathode (24), wherein said anode (22) is adapted to receive fuel and said cathode (24) is adapted to receive an oxidant, said fuel cell system (18) comprising a cathode inlet (28), adapted to guide fluid comprising said oxidant towards said cathode (24), and a cathode outlet (30), adapted to guide fluid away from said cathode (24), said fuel cell system (18) further comprising a cathode recirculation arrangement (36) adapted to selectively allow a fluid communication between said cathode outlet (30) and said cathode inlet (28), said fuel cell system (18) assembly further comprises a control unit (20) according to any one of the preceding claims, said control unit (20) being adapted to issue information to at least said cathode recirculation arrangement (36), preferably said cathode inlet (28) comprises a cathode inlet conduit assembly (32) and said cathode outlet (30) comprises a cathode outlet conduit assembly (34), said cathode recirculation arrangement (36) connecting said cathode inlet conduit assembly (32) to said cathode outlet conduit assembly (34), preferably said fuel cell system (18) comprises a turbo (38) that in turn comprises a compressor (40) forming part of said cathode inlet (28) and a turbine (42) forming part of said cathode outlet (30), said cathode recirculation arrangement (36) connecting a portion of said cathode inlet conduit assembly (32) being located upstream said compressor (40) to a portion of said cathode outlet conduit assembly (34) being located upstream of said turbine (42), as seen in an intended direction of flow from said cathode inlet (28) to said cathode outlet (30).

12. The fuel cell system (18) assembly according to claim 11, wherein said cathode recirculation arrangement (36) comprises a cathode recirculation arrangement valve (44), said cathode recirculation arrangement valve (44) being adapted to assume at least an open condition and a closed condition, respectively, in response to information issued from said control unit (20), preferably said cathode recirculation arrangement valve (44) is adapted to assume at least one intermediate condition between said open condition and said closed condition, preferably said cathode recirculation arrangement valve (44) is adapted to assume a plurality of different intermediate conditions between said open condition and said closed condition.

13. A power assembly comprising the fuel cell system (18) assembly according to any one of claims 11 - 12, wherein said power assembly further comprises a battery (16), said fuel cell system (18) being adapted to charge said battery (16) at least during a charging condition of said power assembly.

14. A vehicle comprising a fuel cell system (18) assembly according to any one of claims 11 - 12 or a power assembly according to claim 13.

15. A method for controlling a fuel cell system (18), said fuel cell system (18) being adapted to produce electric power and comprising an anode (22) and a cathode (24), said anode (22) being adapted to receive fuel and said cathode (24) being adapted to receive an oxidant, said fuel cell system (18) comprising a cathode inlet (28), adapted to guide fluid comprising said oxidant towards said cathode (24), and a cathode outlet (30), adapted to guide fluid away from said cathode (24), said fuel cell system (18) further comprising a cathode recirculation arrangement (36) adapted to selectively allow a fluid communication between said cathode outlet (30) and said cathode inlet (28), **characterized by** predicting a future power requirement (P(t)) from said fuel cell system (18) over a future time range (Δt) and controlling said cathode recirculation arrangement (36) in response to said prediction.

## Patentansprüche

1. Steuereinheit (20) für ein Brennstoffzellensystem (18), wobei das Brennstoffzellensystem (18) ausgelegt ist, um elektrischen Strom zu erzeugen, und eine Anode (22) und eine Kathode (24) umfasst, wobei die Anode (22) ausgelegt ist, um Brennstoff zu empfangen, und die Kathode (24) ausgelegt ist, um ein Oxidationsmittel zu empfangen, wobei das Brennstoffzellensystem (18) einen Kathodeneinlass (28), der ausgelegt ist, um Fluid, das das Oxidationsmittel umfasst, zu der Kathode (24) zu führen, und einen Kathodenauslass (30) umfasst, der ausgelegt ist, um Fluid von der Kathode (24) wegzuführen, wobei das Brennstoffzellensystem (18) ferner eine Kathodenrezirkulationsanordnung (36) umfasst, die ausgelegt ist, um als Reaktion auf von der Steuereinheit (20) ausgegebene Informationen selektiv Fluidkommunikation zwischen dem Kathodenauslass (30) und dem Kathodeneinlass (28) zuzulassen oder zu verhindern, **dadurch gekennzeichnet, dass** die Steuereinheit (20) ausgelegt ist, um als Reaktion auf den vorhergesagten zukünftigen Strombedarf (P(t)) einen zukünftigen Strombedarf (P(t)) aus dem Brennstoffzellensystem (18) über einen zukünftigen Zeitbereich (Δt) vorherzusagen und Informationen an die Kathodenrezirkulationsanordnung (36) auszugeben, wobei die Informationen angeben, ob die Kathodenrezirkulationsanordnung (36) einen Zustand annehmen sollte, um Fluidkommunikation zwischen dem Kathodenauslass (30) und dem Kathodeneinlass (28) zuzulassen oder um Fluidkommunikation zwischen dem Kathodenauslass (30) und dem Kathodeneinlass (28) zu verhindern.

2. Steuereinheit (20) nach Anspruch 1, wobei die Steuereinheit (20) ausgelegt ist, um einen minimalen Ausgangsstrom-geschlossen-Kommunikationswert (P_{min,c}) zu verwenden, wenn als Reaktion auf den vorhergesagten zukünftigen Strombedarf (P(t)) Informationen an die Kathodenrezirkulationsanordnung (36) ausgegeben werden, wobei der minimale Ausgangsstrom-geschlossen-Kommunikationswert (P_{min,c}) den minimalen Strom angibt, der durch das Brennstoffzellensystem (18) erzeugt werden kann, wenn Fluidkommunikation zwischen dem Kathodenauslass (30) und dem Kathodeneinlass (28) verhindert wird und das Brennstoffzellensystem (18) in Betrieb ist, wobei die Steuereinheit (20) vorzugsweise ausgelegt ist, um einen durchschnittlichen zukünftigen Strombedarfswert (P_{avg}) zu ermitteln, der einen vorhergesagten durchschnittlichen zukünftigen Strombedarf (P(t)) über einen zukünftigen Zeitbereich (Δt) angibt, wobei die Steuereinheit (20) ausgelegt ist, um als Reaktion auf den durchschnittlichen zukünftigen Strombedarfswert (P_{avg}) und den minimalen Ausgangsstrom-geschlossen-Kommunikationswert (P_{min,c}) die Informationen auszugeben, um dadurch die Kathodenrezirkulationsanordnung (36) während des zukünftigen Zeitbereichs (Δt) zu steuern, wobei die Steuereinheit (20) vorzugsweise ausgelegt ist, um die Informationen derart auszugeben, dass als Reaktion auf das Erkennen, dass der durchschnittliche zukünftige Strombedarfswert (P_{avg}) gleich dem minimalen Ausgangsstrom-geschlossen-Kommunikationswert (P_{min,c}) ist oder diesen überschreitet, die Informationen angeben, dass Fluidkommunikation zwischen dem Kathodenauslass (30) und dem Kathodeneinlass (28) für einen aggregierten Fluidkommunikationszeitbereich zugelassen ist, der kleiner als der zukünftige Zeitbereich (Δt) ist, wobei der aggregierte Fluidkommunikationszeitbereich vorzugsweise im Bereich von 0 bis 50 % des zukünftigen Zeitbereichs (Δt) liegt.

3. Steuereinheit (20) nach Anspruch 2, wobei die Steuereinheit (20) ausgelegt ist, um die Informationen derart auszugeben, dass als Reaktion auf das Erkennen, dass der zukünftige Zeitbereich (Δt) einen oder mehrere Momentanzeitbereiche (δt) umfasst, innerhalb deren erwartet wird, dass der zukünftige Strombedarf (P(t)) niedriger als der minimale Ausgangsstrom-geschlossen-Kommunikationswert (P_{min.c}) ist, die Informationen angeben, dass Fluidkommunikation zwischen dem Kathodenauslass (30) und dem Kathodeneinlass (28) für den einen oder die mehreren Momentanzeitbereiche (St) zugelassen ist, wobei die Informationen vorzugsweise angeben, dass Fluidkommunikation zwischen dem Kathodenauslass (30) und dem Kathodeneinlass (28) nur für den einen oder die mehreren Momentanzeitbereiche (δt) zugelassen ist.

4. Steuereinheit (20) nach einem der Ansprüche 2 bis 3, wobei die Steuereinheit (20) ausgelegt ist, um einen minimalen Ausgangsstrom-offen-Kommunikationswert (P_{min,o}) zu verwenden, wobei der minimale Ausgangsstrom-offen-Kommunikationswert (P_{min,o}) den minimalen Strom angibt, der durch das Brennstoffzellensystem (18) erzeugt werden kann, wenn Fluidkommunikation zwischen dem Kathodenauslass (30) und dem Kathodeneinlass (28) zugelassen ist und das Brennstoffzellensystem (18) in Betrieb ist.

5. Steuereinheit (20) nach Anspruch 4, wenn abhängig von Anspruch 3, wobei die Steuereinheit (20) ausgelegt ist, um die Informationen derart auszugeben, dass als Reaktion auf das Erkennen eines Referenzzeitbereichs (δt) des mindestens einen des einen oder der mehreren Momentanzeitbereiche einen Teilbereich (εt) umfasst, innerhalb dessen der zukünftige Strombedarf (P(t)) voraussichtlich niedriger als der minimale Ausgangsstrom-offen-Kommunikationswert (P_{min,o}) ist, die zeitliche Ausdehnung des Referenzzeitbereichs (δt) erhöht wird.

6. Steuereinheit (20) nach Anspruch 4, wobei die Steuereinheit (20) ausgelegt ist, um die Informationen derart auszugeben, dass als Reaktion auf das Erkennen, dass der durchschnittliche zukünftige Strombedarfswert (P_{avg}) niedriger als der minimale Ausgangsstrom-geschlossen-Kommunikationswert (P_{min.c}) ist, aber den minimalen Ausgangsstrom-offen-Wert (P_{min,o}) überschreitet, die Informationen angeben, dass Fluidkommunikation zwischen dem Kathodenauslass (30) und dem Kathodeneinlass (28) für mindestens 90 % des, vorzugsweise während des gesamten, zukünftigen Zeitbereichs (Δt) zugelassen ist.

7. Steuereinheit (20) nach einem der Ansprüche 4 bis 6, wobei die Steuereinheit (20) ausgelegt ist, um als Reaktion auf das Erkennen, dass der durchschnittliche zukünftige Strombedarfswert (P_{avg}) niedriger als der minimale Ausgangsstrom-offen-Kommunikationswert (P_{min.o}) ist, Informationen des Brennstoffzellensystems (18) auszugeben, die angeben, dass das Brennstoffzellensystem (18) während des gesamten zukünftigen Zeitbereichs (Δt) abgeschaltet werden sollte.

8. Steuereinheit (20) nach einem der vorstehenden Ansprüche, wobei das Brennstoffzellensystem (18) ausgelegt ist, um zum Antrieb eines Fahrzeugs (10) beizutragen, und wobei die Steuereinheit (20) ausgelegt ist, um fahrzeugbezogene Informationen zu empfangen, die mindestens eines der Folgenden für den zukünftigen Zeitbereich (Δt) angeben:
- eine Verkehrssituation für ein bevorstehendes Bodensegment, auf dem das Fahrzeug (10) voraussichtlich fahren wird;
- eine Geländebedingung für ein bevorstehendes Bodensegment, auf dem das Fahrzeug (10) voraussichtlich fahren wird;
- eine Topographie eines bevorstehenden Bodensegments, auf dem das Fahrzeug (10) voraussichtlich fahren wird;
- ein Bruttogewicht des Fahrzeugs (10);
- Umgebungsbedingungen der Umgebung wie etwa Windgeschwindigkeit und -richtung;
- technischer Zustand, Verlauf und/oder Betriebszustand des Brennstoffzellensystems und
- eine geschätzte Reichweite des Fahrzeugs und eine Entfernung zu einer Tankstelle und die fahrzeugbezogenen Informationen beim Vorhersagen des zukünftigen Strombedarfs (P(t)) aus dem Brennstoffzellensystem (18) zu verwenden.

9. Steuereinheit (20) nach einem der vorstehenden Ansprüche, wobei das Brennstoffzellensystem (18) ausgelegt ist, um mit einer Batterie (16) verbunden zu werden, und wobei die Steuereinheit (20) ausgelegt ist, um Batterieinformationen zu empfangen, die mindestens eines der Folgenden für den zukünftigen Zeitbereich (Δt) angeben:
- einen aktuellen Ladezustand der Batterie (16), und
- eine Energiekapazität der Batterie (16),
und die Batterieinformationen zu verwenden, wenn der zukünftige Strombedarf (P(t)) aus dem Brennstoffzellensystem (18) vorhergesagt wird.

10. Steuereinheit (20) nach einem der vorstehenden Ansprüche, wobei der zukünftige Zeitbereich (Δt) mindestens 10 Sekunden, vorzugsweise mindestens 100 Sekunden, mehr bevorzugt mindestens 300 Sekunden beträgt.

11. Anordnung eines Brennstoffzellensystems (18), das ein Brennstoffzellensystem (18) umfasst, wobei das Brennstoffzellensystem (18) eine Anode (22) und eine Kathode (24) umfasst, wobei die Anode (22) ausgelegt ist, um Brennstoff zu empfangen und die Kathode (24) ausgelegt ist, um ein Oxidationsmittel zu empfangen, wobei das Brennstoffzellensystem (18) einen Kathodeneinlass (28), der ausgelegt ist, um Fluid, das das Oxidationsmittel umfasst, zu der Kathode (24) zu führen, und einen Kathodenauslass (30) umfasst, der ausgelegt ist, um Fluid von der Kathode (24) wegzuführen, wobei das Brennstoffzellensystem (18) ferner eine Kathodenrezirkulationsanordnung (36) umfasst, die ausgelegt ist, um selektiv eine Fluidkommunikation zwischen dem Kathodenauslass (30) und dem Kathodeneinlass (28) zuzulassen, wobei die Anordnung des Brennstoffzellensystems (18) ferner eine Steuereinheit (20) nach einem der vorstehenden Ansprüche umfasst, wobei die Steuereinheit (20) ausgelegt ist, um Informationen an mindestens die Kathodenrezirkulationsanordnung (36) auszugeben, wobei der Kathodeneinlass (28) vorzugsweise eine Kathodeneinlassleitungsanordnung (32) umfasst und der Kathodenauslass (30) eine Kathodenauslassleitungsanordnung (34) umfasst, wobei die Kathodenrezirkulationsanordnung (36) die Kathodeneinlassleitungsanordnung (32) mit der Kathodenauslassleitungsanordnung (34) verbindet, wobei das Brennstoffzellensystem (18) vorzugsweise einen Turbo (38), der wiederum einen Verdichter (40) umfasst, der Teil des Kathodeneinlasses (28) bildet, und eine Turbine (42) umfasst, die Teil des Kathodenauslasses (30) bildet, wobei die Kathodenrezirkulationsanordnung (36) bei Betrachtung in einer beabsichtigten Strömungsrichtung von dem Kathodeneinlass (28) zu dem Kathodenauslass (30) einen Abschnitt der Kathodeneinlassleitungsanordnung (32), der dem Verdichters (40) vorgelagert angeordnet ist, mit einem Abschnitt der Kathodenauslassleitungsanordnung (34) verbindet, der der Turbine (42) vorgelagert angeordnet ist.

12. Anordnung des Brennstoffzellensystems (18) nach Anspruch 11, wobei die Kathodenrezirkulationsanordnung (36) ein Kathodenrezirkulationsanordnungsventil (44) umfasst, wobei das Kathodenrezirkulationsanordnungsventil (44) ausgelegt ist, um mindestens einen offenen Zustand bzw. einen geschlossenen Zustand als Reaktion auf von der Steuereinheit (20) ausgegebene Informationen anzunehmen, wobei das Kathodenrezirkulationsanordnungsventil (44) vorzugsweise ausgelegt ist, um mindestens einen Zwischenzustand zwischen dem offenen Zustand und dem geschlossenen Zustand anzunehmen, wobei das Kathodenrezirkulationsanordnungsventil (44) vorzugsweise ausgelegt ist, um eine Vielzahl unterschiedlicher Zwischenzustände zwischen dem offenen Zustand und dem geschlossenen Zustand anzunehmen.

13. Leistungsbaugruppe, die die Anordnung des Brennstoffzellensystems (18) nach einem der Ansprüche 11 bis 12 umfasst, wobei die Leistungsbaugruppe ferner eine Batterie (16) umfasst, wobei das Brennstoffzellensystem (18) ausgelegt ist, um die Batterie (16) mindestens während einer Ladebedingung der Leistungsbaugruppe zu laden.

14. Fahrzeug, das eine Anordnung eines Brennstoffzellensystems (18) nach einem der Ansprüche 11 bis 12 oder eine Leistungsbaugruppe nach Anspruch 13 umfasst.

15. Verfahren zum Steuern eines Brennstoffzellensystems (18), wobei das Brennstoffzellensystem (18) ausgelegt ist, um elektrischen Strom zu erzeugen und eine Anode (22) und eine Kathode (24) umfasst, wobei die Anode (22) ausgelegt ist, um Brennstoff zu empfangen, und die Kathode (24) ausgelegt ist, um ein Oxidationsmittel zu empfangen, wobei das Brennstoffzellensystem (18) einen Kathodeneinlass (28), der ausgelegt ist, um Fluid, das das Oxidationsmittel umfasst, zu der Kathode (24) zu führen, und einen Kathodenauslass (30) umfasst, der ausgelegt ist, um Fluid von der Kathode (24) wegzuführen, wobei das Brennstoffzellensystem (18) ferner eine Kathodenrezirkulationsanordnung (36) umfasst, die ausgelegt ist, um selektiv eine Fluidkommunikation zwischen dem Kathodenauslass (30) und dem Kathodeneinlass (28) zuzulassen, **gekennzeichnet durch** Vorhersagen eines zukünftigen Strombedarfs (P(t)) aus dem Brennstoffzellensystem (18) über einen zukünftigen Zeitbereich (Δt) und Steuern der Kathodenrezirkulationsanordnung (36) als Reaktion auf die Vorhersage.

## Revendications

1. Unité de commande (20) destinée à un système de pile à combustible (18), ledit système de pile à combustible (18) étant conçu pour produire de la puissance électrique et comprenant une anode (22) et une cathode (24), ladite anode (22) étant conçue pour recevoir du combustible et ladite cathode (24) étant conçue pour recevoir un oxydant, ledit système de pile à combustible (18) comprenant une entrée de cathode (28), conçue pour guider un fluide comprenant ledit oxydant en direction de ladite cathode (24), et une sortie de cathode (30), conçue pour guider le fluide à l'écart de ladite cathode (24), ledit système de pile à combustible (18) comprenant en outre un agencement de recirculation de cathode (36) conçu pour permettre ou empêcher sélectivement une communication fluidique entre ladite sortie de cathode (30) et ladite entrée de cathode (28) en réponse à des informations délivrées par ladite unité de commande (20), **caractérisée en ce que** ladite unité de commande (20) est conçue pour prédire une exigence de puissance future (P(t)) par ledit système de pile à combustible (18) sur une plage temporelle future (Δt) et pour délivrer des informations audit agencement de recirculation de cathode (36) en réponse à ladite exigence de puissance future prédite (P(t)), lesdites informations indiquant si ledit agencement de recirculation de cathode (36) doit adopter une condition de façon à permettre une communication fluidique entre ladite sortie de cathode (30) et ladite entrée de cathode (28) ou de façon à empêcher une communication fluidique entre ladite sortie de cathode (30) et ladite entrée de cathode (28).

2. Unité de commande (20) selon la revendication 1, dans laquelle ladite unité de commande (20) est conçue pour utiliser une valeur de communication fermée de puissance de sortie minimale (P_{min,c}) lors de la délivrance d'informations audit agencement de recirculation de cathode (36) en réponse à ladite exigence de puissance future prédite (P(t)), ladite valeur de communication fermée de puissance de sortie minimale (P_{min,c}) indiquant la puissance minimale qui peut être produite par ledit système de pile à combustible (18) lorsqu'une communication fluidique entre ladite sortie de cathode (30) et ladite entrée de cathode (28) est empêchée et que le système de pile à combustible (18) fonctionne, de préférence ladite unité de commande (20) est conçue pour déterminer une valeur moyenne d'exigence de puissance future (P_{avg}), indiquant une exigence de puissance future moyenne prédite (P(t)) sur une plage temporelle future (Δt), ladite unité de commande (20) étant conçue pour délivrer lesdites informations en réponse à ladite valeur moyenne d'exigence de puissance future (P_{avg}) et à ladite valeur de communication fermée de puissance de sortie minimale (P_{min,c}) pour commander de ce fait ledit agencement de recirculation de cathode (36) pendant ladite plage temporelle future (Δt), de préférence ladite unité de commande (20) est conçue pour délivrer lesdites informations de telle sorte que, en réponse à la détection que ladite valeur moyenne d'exigence de puissance future (P_{avg}) est égale à ou dépasse ladite valeur de communication fermée de puissance de sortie minimale (P_{min,c}), lesdites informations indiquent qu'une communication fluidique entre ladite sortie de cathode (30) et ladite entrée de cathode (28) est permise pour une plage temporelle de communication fluidique agrégée étant plus petite que ladite plage temporelle future (Δt), de préférence la plage temporelle de communication fluidique agrégée est dans la plage de 0 à 50 % de ladite plage temporelle future (Δt).

3. Unité de commande (20) selon la revendication 2, dans laquelle ladite unité de commande (20) est conçue pour délivrer lesdites informations de telle sorte que, en réponse à la détection que ladite plage temporelle future (Δt) comprend une ou plusieurs plages temporelles instantanées (δt) au sein desquelles on s'attend à ce que ladite exigence de puissance future (P(t)) soit plus basse que ladite valeur de communication fermée de puissance de sortie minimale (P_{min.c}), lesdites informations indiquent qu'une communication fluidique entre ladite sortie de cathode (30) et ladite entrée de cathode (28) est permise pendant ladite ou lesdites plages temporelles instantanées (δt), de préférence lesdites informations indiquent qu'une communication fluidique entre ladite sortie de cathode (30) et ladite entrée de cathode (28) n'est permise que pendant ladite ou lesdites plages temporelles instantanées (δt).

4. Unité de commande (20) selon l'une quelconque des revendications 2 à 3, dans laquelle ladite unité de commande (20) est conçue pour utiliser une valeur de communication ouverte de puissance de sortie minimale (P_{min,o}), ladite valeur de communication ouverte de puissance de sortie minimale (P_{min,o}) indiquant la puissance minimale qui peut être produite par ledit système de pile à combustible (18) lorsqu'une communication fluidique entre ladite sortie de cathode (30) et ladite entrée de cathode (28) est permise et que le système de pile à combustible (18) fonctionne.

5. Unité de commande (20) selon la revendication 4, prise en dépendance de la revendication 3, dans laquelle ladite unité de commande (20) est conçue pour délivrer lesdites informations de telle sorte que, en réponse à la détection qu'une plage temporelle de référence (δt) de ladite au moins une parmi ladite ou lesdites plages temporelles instantanées comprend une sous-plage (εt) au sein de laquelle on s'attend à ce que ladite exigence de puissance future (P(t)) soit plus basse que ladite valeur de communication ouverte de puissance de sortie minimale (P_{min,o}), l'extension dans le temps de ladite plage temporelle de référence (δt) est augmentée.

6. Unité de commande (20) selon la revendication 4, dans laquelle ladite unité de commande (20) est conçue pour délivrer lesdites informations de telle sorte que, en réponse à la détection que ladite valeur moyenne d'exigence de puissance future (P_{avg}) est plus basse que ladite valeur de communication fermée de puissance de sortie minimale (P_{min.c}) mais dépasse ladite valeur ouverte de puissance de sortie minimale (P_{min,o}), lesdites informations indiquent qu'une communication fluidique entre ladite sortie de cathode (30) et ladite entrée de cathode (28) est permise pendant au moins 90 %, de préférence sur l'ensemble, de ladite plage temporelle future (Δt).

7. Unité de commande (20) selon l'une quelconque des revendications 4 à 6, dans laquelle ladite unité de commande (20) est conçue, en réponse à la détection que ladite valeur moyenne d'exigence de puissance future (P_{avg}) est plus basse que ladite valeur de communication ouverte de puissance de sortie minimale (P_{min.o}), pour délivrer des informations de système de pile à combustible (18) indiquant que le système de pile à combustible (18) doit être mis à l'arrêt sur l'ensemble de ladite plage temporelle future (Δt).

8. Unité de commande (20) selon l'une quelconque des revendications précédentes, dans laquelle ledit système de pile à combustible (18) est conçu pour contribuer à la propulsion d'un véhicule (10) et dans laquelle ladite unité de commande (20) est conçue pour recevoir des informations apparentées au véhicule indiquant au moins l'un de ce qui suit pour ladite plage temporelle future (Δt) :
- une situation de trafic pour un segment de sol à venir sur lequel il est prévu que le véhicule (10) circule ;
- une condition de terrain pour un segment de sol à venir sur lequel il est prévu que le véhicule (10) circule ;
- une topographie d'un segment de sol à venir sur lequel il est prévu que le véhicule (10) circule ;
- un poids brut du véhicule (10) ;
- des conditions environnementales ambiantes, telles que la vitesse et la direction du vent ;
- l'intégrité, l'historique et/ou la condition du système de pile à combustible, et
- une autonomie estimée dudit véhicule et une distance jusqu'à une station de ravitaillement
et pour utiliser les informations apparentées au véhicule lors de la prédiction de ladite exigence de puissance future (P(t)) à partir dudit système de pile à combustible (18).

9. Unité de commande (20) selon l'une quelconque des revendications précédentes, dans laquelle ledit système de pile à combustible (18) est conçu pour être connecté à une batterie (16) et dans laquelle ladite unité de commande (20) est conçue pour recevoir des informations de batterie indiquant au moins l'un de ce qui suit pour ladite plage temporelle future (Δt) :
- un état actuel de charge de la batterie (16), et
- une capacité énergétique de ladite batterie (16),
et pour utiliser les informations de batterie lors de la prédiction de ladite exigence de puissance future (P(t)) à partir dudit système de pile à combustible (18).

10. Unité de commande (20) selon l'une quelconque des revendications précédentes, dans laquelle ladite plage temporelle future (Δt) est d'au moins 10 secondes, de préférence au moins 100 secondes, plus préférablement au moins 300 secondes.

11. Ensemble de système de pile à combustible (18) comprenant un système de pile à combustible (18), ledit système de pile à combustible (18) comprenant une anode (22) et une cathode (24), dans lequel ladite anode (22) est conçue pour recevoir du combustible et ladite cathode (24) est conçue pour recevoir un oxydant, ledit système de pile à combustible (18) comprenant une entrée de cathode (28), conçue pour guider un fluide comprenant ledit oxydant en direction de ladite cathode (24), et une sortie de cathode (30), conçue pour guider le fluide à l'écart de ladite cathode (24), ledit système de pile à combustible (18) comprenant en outre un agencement de recirculation de cathode (36) conçu pour permettre sélectivement une communication fluidique entre ladite sortie de cathode (30) et ladite entrée de cathode (28), ledit ensemble de système de pile à combustible (18) comprend en outre une unité de commande (20) selon l'une quelconque des revendications précédentes, ladite unité de commande (20) étant conçue pour délivrer des informations au moins audit agencement de recirculation de cathode (36), de préférence ladite entrée de cathode (28) comprend un ensemble conduit d'entrée de cathode (32) et ladite sortie de cathode (30) comprend un ensemble conduit de sortie de cathode (34), ledit agencement de recirculation de cathode (36) raccordant ledit ensemble conduit d'entrée de cathode (32) audit ensemble conduit de sortie de cathode (34), de préférence ledit système de pile à combustible (18) comprend un turbo (38) qui à son tour comprend un compresseur (40) faisant partie de ladite entrée de cathode (28) et une turbine (42) faisant partie de ladite sortie de cathode (30), ledit agencement de recirculation de cathode (36) raccordant une partie dudit ensemble conduit d'entrée de cathode (32) étant localisé en amont dudit compresseur (40) à une partie dudit ensemble conduit de sortie de cathode (34) étant localisé en amont de ladite turbine (42), comme on l'observe dans la direction d'écoulement prévue allant de ladite entrée de cathode (28) à ladite sortie de cathode (30).

12. Ensemble de système de pile à combustible (18) selon la revendication 11, dans lequel ledit agencement de recirculation de cathode (36) comprend une valve d'agencement de recirculation de cathode (44), ladite valve d'agencement de recirculation de cathode (44) étant conçue pour adopter au moins une condition ouverte et une condition fermée, respectivement, en réponse à des informations délivrées par ladite unité de commande (20), de préférence ladite valve d'agencement de recirculation de cathode (44) est conçue pour adopter au moins une condition intermédiaire entre ladite condition ouverte et ladite condition fermée, de préférence ladite valve d'agencement de recirculation de cathode (44) est conçue pour adopter une pluralité de conditions intermédiaires différentes entre ladite condition ouverte et ladite condition fermée.

13. Ensemble de puissance comprenant l'ensemble de système de pile à combustible (18) selon l'une quelconque des revendications 11 à 12, dans lequel ledit ensemble de puissance comprend en outre une batterie (16), ledit système de pile à combustible (18) étant conçu pour charger ladite batterie (16) au moins pendant une condition de charge dudit ensemble de puissance.

14. Véhicule comprenant un ensemble de système de pile à combustible (18) selon l'une quelconque des revendications 11 à 12 ou un ensemble de puissance selon la revendication 13.

15. Procédé permettant de commander un système de pile à combustible (18), ledit système de pile à combustible (18) étant conçu pour produire de la puissance électrique et comprenant une anode (22) et une cathode (24), ladite anode (22) étant conçue pour recevoir du combustible et ladite cathode (24) étant conçue pour recevoir un oxydant, ledit système de pile à combustible (18) comprenant une entrée de cathode (28), conçue pour guider un fluide comprenant ledit oxydant en direction de ladite cathode (24), et une sortie de cathode (30), conçue pour guider le fluide à l'écart de ladite cathode (24), ledit système de pile à combustible (18) comprenant en outre un agencement de recirculation de cathode (36) conçu pour permettre sélectivement une communication fluidique entre ladite sortie de cathode (30) et ladite entrée de cathode (28), **caractérisé par** la prédiction d'une exigence de puissance future (P(t)) à partir dudit système de pile à combustible (18) sur une plage temporelle future (Δt) et la commande dudit agencement de recirculation de cathode (36) en réponse à ladite prédiction.
